# EUROPEAN PATENT SPECIFICATION

(11) **EP 2 843 319 B1**
(45) Date of publication and mention of the grant of the patent: **14.06.2017**
(21) Application number: 14382143.7
(22) Date of filing: 17.04.2014
(51) Int. Cl.: F24J 2/04, F24J 2/24, F24J 2/46, F24J 2/40

(54) **Aerothermic solar collector**
Aerothermischer Solarkollektor
Collector solaire aérotherme

(30) Priority: 26.04.2013 ES 201300411
(43) Date of publication of application: 04.03.2015
(73) Proprietor: Garcia Peula, Eva, 18230 Atarfe (ES)
(72) Inventor: Garcia Peula, Eva, 18230 Atarfe (ES)
(74) Representative: Maslanka Kubik, Dorota Irena

(56) References cited:
- DE-A1- 10 004 180
- DE-U1- 29 812 457
- DE-U1-202006 016 294
- DE-U1-202006 019 144
- DE-U1-202008 001 611
- US-A- 4 128 124
- US-A- 4 172 442

## Description

### Technical sector

This device belongs to the thermal solar energy collecting devices sector.

### Status of the art

The growing consumption of hot water for sanitation and heating is related to the increase of the worldwide population. This has represented a very important increase in the price of fossil fuels, which has provoked a rise over the last thirty years in technology related to the use of renewable energies.

The awareness of the effects of contamination has also contributed to this rise. Government awareness in different countries around the world has provoked reaching macro-agreements to reduce these CO₂ emissions and greenhouse effect gases, improving energy efficiency and promoting use of renewable energies.

This increase in use of renewable energies has favoured development of the state of the art. In the thermal solar energy sector; the sector to which the object of this patent belongs; an enormous amount of collectors using a liquid, preferably water or a mixture of the same with glycol, have been developed, and in less measure a gas, preferably air, has been used, and in much less proportion the simultaneous use of both; the object of this patent being framed within the latter proportion.

The technical difficulties in the construction of this type of collectors are improving efficiency of the absorber, reducing thermal losses, impeding condensations and deposition of dirt in the interior and eliminating damages caused by the increase of pressure and temperatures originating from overheating. A collector that simultaneously uses as thermal fluids a liquid and a gas is disclosed in US 4 172 442 A. Another solar collector of this type is disclosed in the Spanish patent "Flat collector of solar radiation and procedure to capture from the blackened surface of its absorber panel" with publication number 2311347, request number 200601256, date of concession 04.09.2009, owner of the same Juan Pedro Andrés Miranda.

### Description of the invention

The technical problem is the use of thermal solar energy, using the simultaneous or not heating of two fluids: one gas and another liquid, eliminating the damages produced by overheating, like pressure and temperature increase, improving the efficiency of the absorber, reducing thermal losses, impeding condensations and the deposition of dirt in its interior. Constructing a collector with reduced manufacturing costs allowing its availability to any sector of society.

The aerothermal solar collector consists of a thermal solar energy-collecting device that heats two fluids, one of them a liquid and the other gaseous, either simultaneously or not. The inclusion of a transparent panel of double-glazing to protect the absorber reduces thermal losses, improving the efficiency. This surface is protected by means of an automatic and/or manual blind to avoid overheating. In addition two horizontal collectors one above and one below linked with each other by vertical tubes in meander shape, that way increasing the absorption surface and therefore the efficiency, form the tube grid through which the liquid runs. The absorber placed behind the tube grid and linked to it is manufactured by a finned panel, preferably metallic, that allows the best heat transmission to the gaseous fluid. The deposition of dirt inside the collector will be impeded by the installation of a filter in the gaseous fluid inlet. The hot gaseous fluid is distributed by means of a ventilator. Control and regulation of the collector operation allows transporting the heat flow from both fluids to the areas that need the mentioned heat contribution, in addition to closing the protective blind when there is a risk of overheating.

These two fluids can be a gas: such as air, and a liquid: such as water or a mixture of it with one or other liquids or a solid or different solution.

The solar aerothermal collector object of this invention could have industrial or domestic use, either individually or forming batteries by uniting two or more units.

The mentioned collector is formed by a preferably parallelepiped casing of rectangular faces built on the upper face from transparent double-glazing formed by glass, an air chamber and another glass, and the rest from a material like aluminium or some type of plastic resistant to solar radiation, that way avoiding the thermal bridge that could be established between the interior and exterior of the mentioned casing, using a preferably dark or opaque black colour for this material. All these faces, except the glass one, will be very well isolated with rock wool or elastomeric foam or any other isolation of adequate thickness. The absorber, installed after the isolation, is made from a finned panel for the entire surface of the collector; these fins will increase the heat transmission surface to the gaseous fluid, and will preferably run horizontally to the base that is the smallest face of the rectangle. Annexed to these fins the tube grid, through which the fluid runs, is installed and formed by two horizontal general collectors one above and one below that are interconnected with vertical tubes of lesser section describing a meander shape, to also increase the absorption surface and the liquid content of the collector.

Both the absorber and the tube grid have a preferably highly selective or opaque black covering, that way allowing the highest possible proportion absorption of solar radiation.

The hydraulic connection of the collector will be on the side faces of the same forming four connections. While the gaseous fluid connection will preferably be by means of two holes in the rear face of the same.

The installation of the mentioned collector will preferably be vertical, horizontally positioning the smallest side of the rectangle.

A box containing a blind directed by a guide in the casing in order to hide the glass covering the absorber when the absorption of solar radiation can cause overheating is preferably installed at the upper part of the parallelepiped casing.

Additionally, a filter impeding the deposition of dirt inside the collector is installed in the suction connection of the gaseous fluid. The hot gaseous fluid is distributed by means of a ventilator preferably installed in the impulsion connection specifically dimensioned for the necessary work point (flow and pressure), built from a physically stable chemical material.

The mentioned collector is prepared for interconnection with others forming batteries, hydraulically connecting the general horizontal collectors preferably by using joining couplings with connections at the side faces, and the interconnection of the gaseous fluid can be preferably done by the dimensioning of general impulsion and suction collectors, at the rear part of the panel.

The operational regulation and control of the mentioned solar aerothermal collector will preferably allow, when the difference of temperature between the liquid fluid inside the collector and the heat accumulation reaches a determined positive value, the circulation of the liquid taking the collected heat to the accumulation, the same will happen with the gaseous fluid, when the difference between its temperature inside the collector and the environment temperature in the area to which the mentioned fluid is going to be transported reaches a determined positive value, the gaseous fluid is transported to the area that is to be heated. Additionally when there is no need for collecting thermal solar energy the mentioned regulation and control will allow the closing of the blind, that way impeding the damages caused by overheating. The mentioned blind can be activated manually or automatically through the regulation and control.

### Description of the figures

The attached figures are for better understanding of the features of the invention, together with the specification, being illustrative and not limited.
Figure 1: Is the front view of the aerothermal solar collector. In it (1) represents the box where the blind is installed, (2) represents the hydraulic connection of the tube grid and (3) represents the casing of the collector.

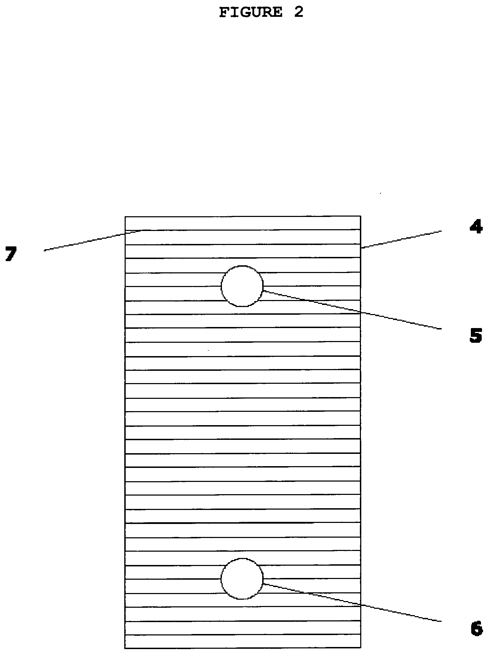

Figure 2: Is the elevation view of the collector. In it (4) represents the collector panel, (5) represents the impulsion hole of the gaseous fluid, (6) represents the suction of the gaseous fluid and (7) represents the fins of the collector.

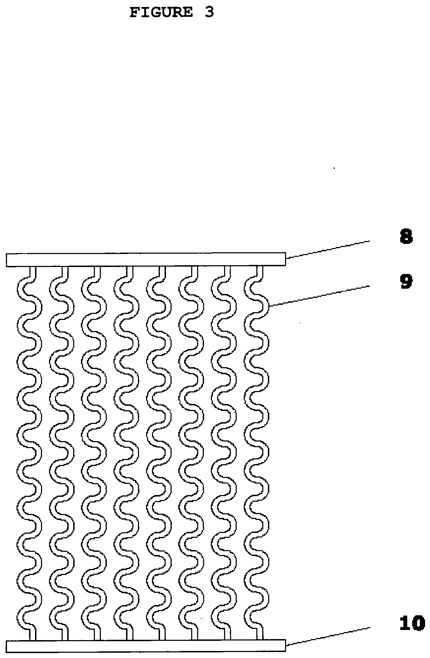

Figure 3: Is the elevation view of the tube grid. In it (8) represents the general impulsion horizontal collector of the liquid fluid, (9) represents the vertical tubes of lesser section that interconnect the general collectors and have the shape of a meander and (10) represents the general return horizontal collector of liquid fluid.

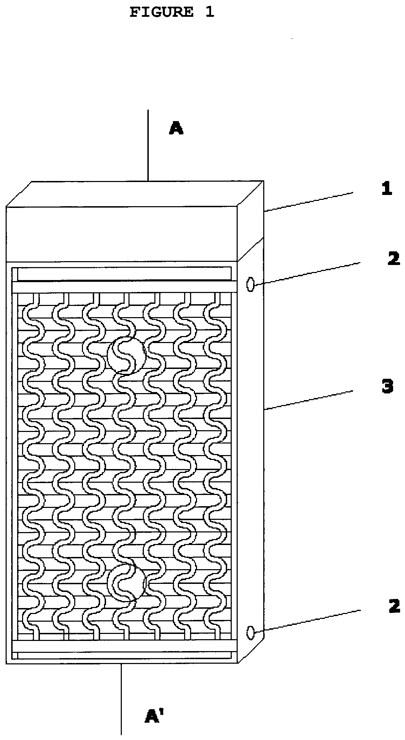

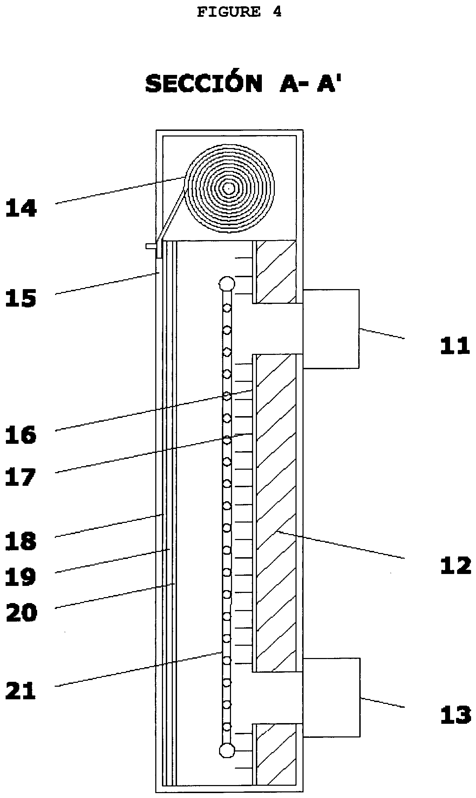

Figure 4: Is a detailed cross section view of figure 1. In it (11) represents the impulsion ventilator of the gaseous fluid, (12) represents the rear isolation of the collector casing, (13) represents the suction filter of the gaseous fluid, (14) represents the protection blind against overheating, (15) represents the guide that directs the blind in the casing, (16) represents the absorber, (17) represents the fins of the absorber, (18 (19) (20) represent the transparent double glazing, with (18) being the external glass pane, (19) the intermediate air chamber and (20) the internal glass pane and (21) represents the tube grid.

### Example of realisation of the invention

One example of realisation of the invention, object of the patent is detailed below.

A parallelepiped casing (3) is built with rectangular faces made from aluminium with breakage of the thermal bridge, excepting the upper face which will be made from transparent double glazing (18) (19) (20), all these faces except the glass one will be isolated with rock wool (12).

Then the absorber (16) formed by a horizontally finned (7) sheet (4) is installed, and linked to this will be the tube grid (21), formed by two horizontal general collectors installed in the upper part (8) and lower part (10) of the collector, joined together by a series of vertical tubes with the shape of a meander (9).

The manufacturing of the absorber and the tube grid can be done using copper, stainless steel, aluminium or any chemical stable conductor metal, both for the absorber as for the tube grid preferably a highly selective covering will be used.

The connections of the tube grid (2) will be on the side faces of the casing, while the connections of the gaseous fluid will be installed in the rear face of the casing, one at the upper part (5), this for impulsion, and the other at the lower part (6), this for suction.

At the upper part of the parallelepiped casing there will a box (1) with a blind (14) that allows covering the glass (18) (19) (20) by running through the guides (15) installed in the casing.

In the suction (6) of the gaseous fluid, there will be a filter (13), and a ventilator (11) will be installed in the impulsion (5) that will distribute the mentioned fluid.

There will be differential control and regulation and by the reading of the two temperature immersion probes in the liquid fluid and the two temperature immersion probes in the gaseous fluid, one installed in the collector and the other installed in the accumulation area of thermal energy, their differentials from the consignment point will be established and when these values are reached a determined relay will be activated that will activate either a pump or a ventilator respectively. In addition, the mentioned system will detect a maximum temperature in the collector and the need for providing heat to the area where there is a need, if the maximum temperature is reached and there is no need for heat, automatically the blind (14) will be lowered to protect against overheating.

The essential nature of the invention is fully described by means of the specification, illustrative figures and this example of realisation of the invention, being able to be made in other procedures, with other materials or even with other details, with the protection claimed by this document requesting the patent covering all the different ways of producing the invention as long as these do not alter, change or modify its essential nature.

## Claims

1. Aerothermal solar collector consisting of a thermal solar energy collecting device that heats two fluids, one of them a liquid and the other gaseous, either simultaneously or not, comprising:
- a casing (3),
- a tube grid (21) through which the liquid runs,
- an absorber (16) that allows heat transmission to the gaseous fluid,
- hydraulic connections (2) of the tube grid (21),
- connections of the gaseous fluid (5, 6) situated in the rear face of the casing (3),
- a transparent panel of double-glazing built on the upper face of the casing (3), comprising an intermediate air chamber (19), **characterised in that**: - said tube grid (21) is formed by two horizontal collectors, installed in the upper part (8) and lower part (10), joined together by means of vertical tubes (9) preferably with a shape of meander,
- said absorber (16) is formed by a horizontally finned (7) sheet (4), placed behind the tube grid (21) and linked to it,
- said hydraulic connection (2) of the tube grid is situated on the side faces of the casing (3).

2. Aerothermal solar collector according to claim 1, wherein the absorber (16) and the tube grid (21) are of highly absorptive material for solar radiation, preferably metallic material, independently selected from the group comprising: copper, stainless steel, aluminum or any chemical stable conductor metal.

3. Aerothermal solar collector according to claim 1 or 2, wherein the absorber (16) and the tube grid (21) have a highly selective or opaque black covering.

4. Aerothermal solar collector according to any of the preceding claims, wherein the fins of the absorber (16) run horizontally to the base that is the smallest face of a rectangle.

5. Aerothermal solar collector according to any of the preceding claims, wherein the absorber (16) is made from a finned panel for the entire surface of the collector.

6. Aerothermal solar collector according to any of claims 4 or 5, wherein said collector is installed vertically, horizontally positioning the smallest face of a rectangle.

7. Aerothermal solar collector according to any of the preceding claims, wherein the connection of the gaseous fluid for impulsion (5) is in the upper part of the casing (3) and the connection of the gaseous fluid for suction (6) is in the lower part of the casing (3).

8. Aerothermal solar collector according to any of the preceding claims, wherein the hydraulic connections (2) form four connections, while the connections of the gaseous fluid (5, 6) are formed by two holes.

9. Aerothermal solar collector according to claim 7, wherein in the connection of the gaseous fluid for suction (6) a filter (13) is installed, whereas in the connection of the gaseous fluid for impulsion (5) a ventilator (11) is installed.

10. Aerothermal solar collector according to any of the preceding claims, wherein the transparent panel of double-glazing is formed by a pane of glass (18), the air chamber (19) and another pane of glass (20), joined to the casing (3).

11. Aerothermal solar collector according to any of the preceding claims, wherein the surface of the transparent panel of double-glazing built on the upper face of the casing (3) is covered by a blind (14).

12. Aerothermal solar collector according to claim 11, wherein the blind (14) is housed in a box (1) installed in the casing (3) and can move through guides (15).

13. Aerothermal solar collector according to any of the preceding claims, wherein all the faces of the collector, except its upper face, are covered by an internal isolation (12).

14. A battery of two or more interconnected aerothermal solar collectors according to any of the preceding claims.

## Patentansprüche

1. Aerothermischer Solarkollektor bestehend aus einer Sammlungsvorrichtung für thermische Solarenergie, welche zwei Fluide erhitzt, eins von denen eine Flüssigkeit und das andere gasförmig, entweder gleichzeitig oder nicht, umfassend:
- ein Gehäuse (3),
- ein Rohrengitter (21), durch welches die Flüssigkeit fließt,
- einen Absorber (16), welcher die Wärmeübertragung zum gasförmigen Fluid ermöglicht,
- hydraulische Anschlüsse (2) des Rohrengitters (21),
- Anschlüsse des gasförmigen Fluides (5, 6), welche sich auf der hinteren Fläche des Gehäuses (3) befinden,
- ein doppelt verglastes durchsichtiges Paneel, welches auf der oberen Fläche des Gehäuses (3) aufgebaut ist, umfassend eine Zwischenluftkammer (19),
**dadurch gekennzeichnet, dass**:
- das genannte Rohrengitter (21) aus zwei waagerechten Kollektoren gebildet ist, welche im oberen Teil (8) und im unteren Teil (10) installiert sind und welche mittels senkrechten Rohren (9) bevorzugt in Form eines Mäanders, zusammengefügt sind,
- der genannte Absorber (16) aus einem Blech (4) mit waagerechten Rippen (7) gebildet ist, welches hinter dem Rohrengitter (21) platziert und mit demselben in Verbindung gebracht wird,
- sich der genannte hydraulische Anschluss (2) des Rohrengitters auf den Seitenflächen des Gehäuses (3) befindet.

2. Aerothermischer Solarkollektor nach Anspruch 1, wobei der Absorber (16) und das Rohrengitter (21) aus einem hoch absorbierenden Material für Sonnenstrahlung sind, bevorzugt einem metallischen Material, unabhängig ausgewählt aus der Gruppe umfassend: Kupfer, Edelstahl, Aluminium oder jedem chemisch stabilen leitenden Metall.

3. Aerothermischer Solarkollektor nach Anspruch 1 oder 2, wobei der Absorber (16) und das Rohrengitter (21) eine hochselektive oder deckende schwarze Abdeckung aufweisen.

4. Aerothermischer Solarkollektor nach einem der vorhergehenden Ansprüche, wobei die Rippen des Absorbers (16) waagerecht zur Grundfläche verlaufen, welche die kleinste Fläche eines Rechtecks ist.

5. Aerothermischer Solarkollektor nach einem der vorhergehenden Ansprüche, wobei der Absorber (16) aus einem gerippten Paneel für die ganze Oberfläche des Kollektors hergestellt ist.

6. Aerothermischer Solarkollektor nach einem der Ansprüche 4 oder 5, wobei der genannte Kollektor senkrecht installiert ist, wobei die kleinste Fläche eines Rechtecks horizontal positioniert wird.

7. Aerothermischer Solarkollektor nach einem der vorhergehenden Ansprüche, wobei der Anschluss des gasförmigen Fluides für den Antrieb (5) im oberen Teil des Gehäuses (3) ist und der Anschluss des gasförmigen Fluides für die Absaugung (6) im unteren Teil des Gehäuses (3) ist.

8. Aerothermischer Solarkollektor nach einem der vorhergehenden Ansprüche, wobei die hydraulischen Anschlüsse (2) vier Anschlüsse bilden, während die Anschlüsse des gasförmigen Fluides (5, 6) aus zwei Löchern gebildet sind.

9. Aerothermischer Solarkollektor nach Anspruch 7, wobei im Anschluss des gasförmigen Fluides für die Absaugung (6) ein Filter (13) installiert ist, während im Anschluss des gasförmigen Fluides für den Antrieb (5) ein Gebläse (11) installiert ist.

10. Aerothermischer Solarkollektor nach einem der vorhergehenden Ansprüche, wobei das doppelt verglaste durchsichtige Paneel aus einer Glasscheibe (18), der Luftkammer (19) und einer anderen Glasscheibe (20), welche mit dem Gehäuse (3) verbunden ist, gebildet ist.

11. Aerothermischer Solarkollektor nach einem der vorhergehenden Ansprüche, wobei die Oberfläche des doppelt verglasten durchsichtigen Paneels, welches auf der oberen Fläche des Gehäuses (3) aufgebaut ist, von einer Blende (14) abgedeckt ist.

12. Aerothermischer Solarkollektor nach Anspruch 11, wobei die Blende (14) in einem Kasten (1) aufgenommen ist, welcher im Gehäuse (3) installiert ist und sich durch Führungen (15) bewegen kann.

13. Aerothermischer Solarkollektor nach einem der vorhergehenden Ansprüche, wobei alle Flächen des Kollektors, außer seiner oberen Fläche, von einer internen Isolierung (12) abgedeckt sind.

14. Gruppe aus zwei oder mehreren miteinander verbundenen aerothermischen Solarkollektoren nach einem der vorhergehenden Ansprüche.

## Revendications

1. Collecteur solaire aérotherme consistant en un dispositif collecteur d'énergie solaire thermique qui réchauffe deux fluides, l'un d'eux un liquide et l'autre gazeux, simultanément ou pas, comprenant:
- un boîtier (3),
- un grille pour tubes (21) à travers laquelle circule le liquide,
- un absorbeur (16) qui permet la transmission de chaleur au fluide gazeux,
- des connexions hydrauliques (2) de la grille pour tubes (21),
- des connexions du fluide gazeux (5, 6) situées dans la face arrière du boîtier (3),
- un panneau transparent à double vitrage construit sur la face supérieure du boîtier (3), comprenant une chambre à air intermédiaire (19),
**caractérisé en ce que**:
- ladite grille pour tubes (21) est formée par deux collecteurs horizontaux, installés dans la partie supérieure (8) et la partie inférieure (10), réunis par le biais de tubes verticaux (9) de préférence avec une forme de méandre,
- ledit absorbeur (16) est formé par une feuille (4) ayant des ailettes horizontales (7), située derrière la grille pour tubes (21) et uni celle-ci,
- ladite connexion hydraulique (2) de la grille pour tubes est située sur les faces latérales du boîtier (3).

2. Collecteur solaire aérotherme selon la revendication 1, dans lequel l'absorbeur (16) et la grille pour tubes (21) sont en une matière très absorbante pour le rayonnement solaire, de préférence en matière métallique, indépendamment choisi parmi le groupe comprenant: cuivre, acier inox, aluminium ou tout métal conducteur chimique stable.

3. Collecteur solaire aérotherme selon la revendication 1 ou 2, dans lequel l'absorbeur (16) et la grille pour tubes (21) ont un recouvrement très sélectif ou opaque.

4. Collecteur solaire aérotherme selon l'une quelconque des revendications précédentes, dans lequel les ailettes de l'absorbeur (16) circulent horizontalement à la base qui est la plus petite face d'un rectangle.

5. Collecteur solaire aérotherme selon l'une quelconque des revendications précédentes, dans lequel l'absorbeur (16) est réalisé en un panneau à ailettes pour toute la surface du collecteur.

6. Collecteur solaire aérotherme selon l'une quelconque des revendications 4 ou 5, dans lequel ledit collecteur est installé verticalement, positionnant horizontalement la face plus petite d'un rectangle.

7. Collecteur solaire aérotherme selon l'une quelconque des revendications précédentes, dans lequel la connexion du fluide gazeux pour impulsion (5) est dans la face supérieure du boîtier (3) et la connexion du fluide gazeux pour succion (6) est dans la partie inférieure du boîtier (3).

8. Collector solaire aérotherme selon l'une quelconque des revendications précédentes, dans lequel les connexions hydrauliques (2) forment quatre connexions, tandis que les connexions du fluide gazeux (5, 6) sont formées par deux trous.

9. Collecteur solaire aérotherme selon la revendication 7, dans lequel dans la connexion du fluide gazeux pour succion (6) est installé un filtre (13), alors que dans la connexion du fluide gazeux pour impulsion (5) est installé un ventilateur (11).

10. Collecteur solaire aérotherme selon l'une quelconque des revendications précédentes, dans lequel le panneau transparent à double vitrage est formé par un panneau de verre (18), la chambre à air (19) et un autre panneau de verre (20), unis au boîtier (3).

11. Collecteur solaire aérotherme selon l'une quelconque des revendications précédentes, dans lequel la surface du panneau transparent de double vitrage construit sur la face supérieure du boîtier (3) est couverte par un volet (14).

12. Collecteur solaire aérotherme selon la revendication 11, dans lequel le volet (14) est logé dans la boîte (1) installée dans le boîtier (3) et peut se déplacer à travers des guides (15).

13. Collecteur solaire aérotherme selon l'une quelconque des revendications précédentes, dans lequel toutes les faces du collecteur, sauf sa face supérieure, sont recouvertes par un isolement interne (12).

14. Batterie de deux ou plusieurs collecteurs solaires aérothermes interconnectés selon l'une quelconque des revendications précédentes.
